# EUROPEAN PATENT APPLICATION

(11) **EP 3 192 829 A1**
(43) Date of publication of application: **19.07.2017**
(21) Application number: 15840732.0
(22) Date of filing: 04.09.2015
(51) Int. Cl.: C08L 7/00, B60C 1/00, C08C 19/22, C08J 3/20, C08K 3/00, C08K 5/29, C08K 5/54, C08L 9/00

(54) **MODIFIED RUBBER, RUBBER COMPOSITION AND TIRE**

(30) Priority: 12.09.2014 JP 2014186074
(71) Applicant: Mitsubishi Gas Chemical Company, Inc., Tokyo 100-8324 (JP)
(72) Inventor: IWATA, Tomoki, Tokyo 125-8601 (JP); UERA, Kazuyoshi, Tokyo 125-8601 (JP); SAKAI, Haruka, Tokyo 125-8601 (JP); KAGEYAMA, Takuya, Tokyo 125-8601 (JP)
(74) Representative: Hoffmann Eitle
(86) International application number: PCT/JP2015/075257
(87) International publication number: WO 2016/039276

(57) **Abstract**

The present invention provides a modified rubber (A) obtained by modifying at least one rubber selected from the group consisting of natural rubbers and synthetic rubbers with a compound represented by formula (1): 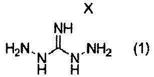 wherein X is an acid forming a salt with a guanidine moiety.

## Description

### Technical Field

The present invention relates to a modified rubber, a rubber composition and a tire.

### Background Art

Fillers are compounding ingredients to be used by being mixed in rubber for the purposes of reinforcing or bulking the rubber, imparting special functions to the rubber, or the like. Carbon black, which is typical as a filler, contributes to improvements (reinforcing effects) of mechanical properties of rubber, such as the elastic modulus or the breaking strength, and also has functions such as imparting electroconductivity to the rubber.

Further as fillers capable of providing rubber with reinforcing effects as in carbon black, and capable of providing rubber compositions low in heat build-up, that is, having a low loss property, inorganic fillers such as silica are known. The inorganic fillers such as silica are used for rubber compositions for environment-friendly, low-fuel consumption tires, and the like.

In a rubber composition compounded with an inorganic filler, when the rubber composition is compounded with the inorganic filler, the inorganic filler, particularly hydrophilic silica having silanol groups on the surface thereof is low in the affinity for hydrophobic rubber and then aggregates in the rubber composition. Hence, in order to enhance the reinforcement and attain the low heat build-up effect by using silica, it is necessary to enhance the affinity of rubber for silica. As its methods, a synthetic rubber improved in the affinity for an inorganic filler by modifying terminals with polar groups (for example, see Patent Literature 1), a synthetic rubber improved in the affinity for an inorganic filler by being copolymerized with a polar group-containing monomer (for example, see Patent Literature 2), and the like are known. As methods of introducing polar groups by modifying natural rubber, a method in which natural rubber is oxidized and thereafter modified with a hydrazide compound having a polar group (for example, see Patent Literature 3), and a method in which a silane coupling agent is added to a rubber composition containing a modified natural rubber having polar groups introduced therein and silica to thereby further improve the dispersibility of the silica (for example, see Patent Literature 4) are known.

### Citation List

### Patent Literature

Patent Literature 1: Japanese Patent Laid-Open No. 2010-209253
Patent Literature 2: Japanese Patent Laid-Open No. 2011-38009
Patent Literature 3: Japanese Patent Laid-Open No. 2009-108204
Patent Literature 4: Japanese Patent Laid-Open No. 2011-246513

### Summary of Invention

### Technical Problem

It is foreseen that from now on, there increasingly rises the society's concern for environmental problems such as a rise in the carbon dioxide concentration in the air and the air pollution, and there are demanded technologies of a modified rubber suppressing the rolling resistance of tires and leading to the fuel consumption reduction of automobiles, and a rubber composition and tire, excellent in the low loss property, containing the modified rubber and inorganic fillers such as silica.

The present invention has been achieved in consideration of the above conventional problems, and is to provide a modified rubber capable of improving the low loss property and the breaking strength when the modified rubber is made into a rubber composition containing inorganic fillers such as silica.

### Solution to Problem

As a result of exhaustive studies, the present inventors have found that when a rubber composition is made by using a modified rubber obtained by modifying at least one rubber selected from the group consisting of natural rubbers and synthetic rubbers with a compound having a specific structure, the low loss property and breaking strength thereof are improved; and this finding has led to the completion of the present invention.

That is, the present invention is as follows.

[1] A modified rubber (A), obtained by modifying at least one rubber selected from the group consisting of natural rubbers and synthetic rubbers with a compound represented by formula (1): 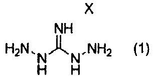 wherein X is an acid forming a salt with a guanidine moiety.
[2] The modified rubber (A) according to [1], obtained by mixing the at least one rubber selected from the group consisting of natural rubbers and synthetic rubbers with the compound represented by formula (1), at a temperature of 20 to 180°C.
[3] The modified rubber (A) according to [1] or [2], wherein an amount of the compound represented by formula (1) used is 0.01 to 10% by mass based on a total amount of the rubber.
[4] A rubber composition, comprising: a modified rubber (A) according to any one of [1] to [3], a filler comprising an inorganic filler (B), and a silane coupling agent (C).
[5] The rubber composition according to [4], wherein the inorganic filler (B) is silica.
[6] The rubber composition according to [4] or [5], wherein the filler comprises carbon black.
[7] The rubber composition according to any one of [4] to [6], at least partially comprising the modified rubber (A), wherein the rubber composition is obtained by mixing the compound represented by formula (1), the at least one rubber selected from the group consisting of natural rubbers and synthetic rubbers, the filler comprising the inorganic filler (B), and the silane coupling agent (C).
[8] The rubber composition according to [7], wherein a temperature in the mixing is in the range of 20 to 180°C.
[9] The rubber composition according to [7] or [8], wherein an amount of the compound represented by formula (1) used is 0.01 to 10% by mass based on a total amount of the rubber.
[10] A tire, for use in a tread of a tire member, comprising the rubber composition according to any one of [4] to [9].

### Advantageous Effects of Invention

According to the modified rubber according to the present invention, there can be provided a rubber composition excellent in the low loss property and the breaking strength.

### Description of Embodiments

Hereinafter, an embodiment (hereinafter, referred to simply as "the present embodiment") to carry out the present invention will be described in detail. The following present embodiment is an exemplification to interpret the present invention, and has no effect to limiting the present invention to the following content. The present invention can be carried out by being suitably changed and modified in the range of its gist.

### <Modified rubber>

A modified rubber (A) (hereinafter, also simply referred to as "modified rubber") according to the present embodiment can be obtained by modifying at least one rubber (hereinafter, referred to as "raw material rubber" or also simply referred to as "rubber") selected from the group consisting of natural rubbers and synthetic rubbers with a compound (hereinafter, referred to as "rubber modifying agent" or also simply referred to as "modifying agent") represented by formula (1): 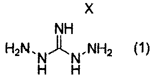 wherein X is an acid forming a salt with a guanidine moiety.

As a raw material rubber of the modified rubber (A) according to the present embodiment, any of natural rubber, synthetic rubber and the both can be used, but particularly the case of using natural rubber can remarkably attain the effect of the present embodiment, which is suitable. This is because whereas as seen in the synthetic rubber improved in the affinity for an inorganic filler by modifying terminals with polar groups, described in the above Patent Literature 1, or in the synthetic rubber improved in the affinity for an inorganic filler by being copolymerized with a polar group-containing monomer, described in the above Patent Literature 2, polar groups can simply be introduced to synthetic rubbers in polymerization, such means cannot be used for natural rubber.

The natural rubber is not especially limited, but either shape of sheet rubber and block rubber obtained by coagulating and drying natural rubber latex can be used as a raw material. The sheet rubber is not especially limited, but includes, on the classification by grading according to "International Standards of Quality and Packing for Natural Rubber Grades" (popular name: Green Book), ribbed smoked sheets (RSS) obtained by drying sheets while smoking the sheets with smoke, and crepes obtained by fully water-washing and hot-air drying air dry sheets (ADS) coagula obtained by hot-air drying sheets, and besides includes TC rubber (Technically Classified Rubber), SP rubber (Super Processing Rubber), MG rubber, PP crepe, and softener- and peptizer-added rubber. The block rubber is not especially limited, but includes SMR (Standard Malaysian Rubber) of Malaysia, SIR of Indonesia, TTR of Thailand, SCR of Sri Lanka, and SSR of Singapore. These natural rubber raw materials may be used singly or in a combination of two or more thereof.

Further, there may be used a rubber obtained by subjecting a natural rubber latex to an oxidation treatment, and thereafter coagulating it, and the oxidation of the natural rubber latex can be carried out by a well-known method. For example, according to the description of Japanese Patent Laid-Open No. 8-81505, the oxidation of a natural rubber latex can be carried out by air-oxidizing the natural rubber latex dissolved in a proportion of 1.0 to 30% by mass in an organic solvent in the presence of a metallic oxidation catalyst. Further as described in Japanese Patent Laid-Open No. 9-136903, the oxidation can also be carried out by adding a carbonyl compound to a natural rubber latex. In the case of carrying out the air oxidation as the oxidation method, as described in Japanese Patent Laid-Open No. 9-136903, the air oxidation may be carried out in the presence of a radical generator in order to promote the air oxidation. The radical generator is not especially limited, but peroxide-based radical generators, redox-based radical generators and azo-based radical generators are suitably used.

The synthetic rubber usable as a raw material of the modified rubber (A) is not especially limited, but includes dienic rubbers having double bonds in their molecules, such as 1,4-polybutadiene, 1,2-polybutadiene, 1,4-polyisoprene, 3,4-polyisoprene, styrene-butadiene rubber, terminal-modified styrene-butadiene rubber, chloroprene rubber, nitrile rubber, ethylene propylene rubber, and ethylene propylene diene rubber.

In the present embodiment, there may be used any of the above natural rubber, synthetic rubber and modified rubber. These may be used singly or in a combination of two or more thereof.

The rubber modifying agent in the present embodiment is the above-mentioned compound represented by formula (1) (hereinafter, referred to also as "1,3-diaminoguanidine salt" or "diaminoguanidine salt"). 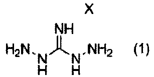 wherein X is an acid forming a salt with a guanidine moiety.

When the modified rubber according to the present embodiment is used for a rubber composition, the cause being excellent in the low loss property is presumed as follows (however, the cause is not limited thereto). In the modified rubber obtained by reacting a rubber with the above modifying agent, hydrazine moieties originated from the modifying agent are bonded with the rubber. Since the modifying agent has bifunctional hydrazine moieties, the breaking strength is improved due to bonding of each functional group with the rubber. Since the modified rubber has polar groups such as amino groups, the affinity of the rubber for polar groups of an inorganic filler, particularly in the case of silica, silanol groups of the silica surface, is improved, and thereby the adhesivity between the rubber and the inorganic filler is thereby improved; and when rubber moldings such as tires are obtained by using the modified rubber, the rubber moldings become excellent in the low loss property. Particularly guanidine moieties originated from the modifying agent function as polar groups of the modified rubber, and contribute to the improvement of the adhesivity between the rubber and the inorganic filler due to the fact that the moieties form strong hydrogen bonds with silanol groups of the silica surface. The formation of the strong hydrogen bonds is caused by high polarity, strong basicity and the like of the guanidine moieties.

1,3-diaminoguanidine, since a plus charge of a conjugate acid is resonantly stabilized by a plurality of nitrogen atoms present in its molecule, exhibits strong basicity, and is usually present as a complex (salt) with the acid. The 1,3-diaminoguanidine salt is not especially limited, but examples thereof include a 1,3-diaminoguanidine hydrochloride salt, a 1,3-diaminoguanidine hydroiodide salt, a 1,3-diaminoguanidine hydrobromide salt, a 1,3-diaminoguanidine sulfate salt, a 1,3-diaminoguanidine nitrate salt, a 1,3-diaminoguanidine oxalate salt, a 1,3-diaminoguanidine phosphate salt, 1,3-diaminoguanidine carbonate salt, a 1,3-diaminoguanidine acetate salt, 1,3-diaminoguanidine sulfamate salt, a 1,3-diaminoguanidine perchlorate salt, a 1,3-diaminoguanidine silicate salt, a 1,3-diaminoguanidine borate salt, and 1,3-diaminoguanidine phenylphosphinate salt. Among these, preferable are a 1,3-diaminoguanidine hydrochloride salt, a 1,3-diaminoguanidine sulfate salt, a 1,3-diaminoguanidine carbonate salt and a 1,3-diaminoguanidine nitrate salt, which are commercially easily available; and from ease of refinement in production, preferable are a 1,3-diaminoguanidine hydrochloride salt and a 1,3-diaminoguanidine carbonate salt.

Then, a production method of the modified rubber according to the present embodiment will be described. The modified rubber according to the present embodiment is obtained, though not especially limited, for example, by mixing together a modifying agent being a compound represented by formula (1) and a rubber by using a mixer, an extruder, a kneader or the like. Among these, the mixing is preferably carried out by using a kneader from the point of the improvement of the dispersibility. As a method of adding the modifying agent to a mixer, an extruder, a kneader or the like, there may be used any of a method of adding a powder as it is of the modifying agent, a method of adding the modifying agent as a solution in which the modifying agent is dissolved in a solvent, and a method of adding the modifying agent as an emulsion solution thereof.

The reaction condition in order to obtain the modified rubber according to the present embodiment is not especially limited, but a rubber and a modifying agent are mixed preferably at a temperature of 20 to 180°C to thereby cause the rubber to be modified, and more preferably at a temperature of 50 to 160°C to thereby cause the rubber to be modified. When the temperature is 20°C to 180°C, the rubber and the modifying agent can be mixed sufficiently, and further the decomposition of the modifying agent is likely to be suppressed. The kneading time of the rubber is regulated so as to be preferably 0.5 to 30 min, and more preferably 2.0 to 10 min, at the above reaction temperature. When the time is 0.5 to 30 min, the rubber and the modifying agent are likely to be able to be sufficiently reacted without worsening the productivity. With respect to the atmosphere for the reaction, the reaction is carried out preferably in the presence of oxygen such as air. This is because when the kneading is carried out in the presence of oxygen, the rubber is partially oxidized and the reactivity with the modifying agent is likely to be improved.

Further although the modified rubber according to the present embodiment can be obtained by mixing together at one time a modifying agent and a rubber by an extruder, a kneader or the like, the use of means in which a rubber coagulated after the oxidation treatment of a natural rubber latex is used, and the use of means of carrying out such a step that the molecular cohesion (association) is loosened and molecular chains are cleaved by imparting a mechanical force to a raw material rubber, which is called mastication, before a modifying agent is added, to thereby regulate the plasticity number of the rubber to an easily processable level, are also preferable because of being likely to be able to improve the reactivity of the modifying agent with the rubber. A peptizer may be used in the above mastication step.

Also by compounding a modifying agent, a rubber, an inorganic filler and a silane coupling agent with various types of compounding ingredients selected suitably as required, and mixing the mixture by using a mixer, an extruder, a kneader or the like, a modified rubber is partially generated in a rubber composition. This means is better in the point of the work efficiency than the above means of mixing together the modifying agent with the rubber. By carrying out this operation, a rubber composition according to the present embodiment can be obtained.

The amount of a modifying agent used when a modified rubber according to the present embodiment is produced is, based on the total amount (100% by mass) of a raw material rubber, preferably 0.01 to 10% by mass, and more preferably 0.1 to 3.0% by mass, in the point that in the obtained modified rubber, the uniform introduction of a small amount of polar groups in each molecule of the rubber improves the affinity for fillers such as silica and carbon black, and provides a rubber composition excellent in the low loss property without reducing the processability.

<Rubber composition>

A rubber composition according to the present embodiment comprises a modified rubber (A), a filler containing an inorganic filler (B) and a silane coupling agent (C).

A rubber composition according to the present embodiment is obtained by mixing a modified rubber (A), a filler containing an inorganic filler (B), and a silane coupling agent (C). Further a rubber composition according to the present embodiment may be made as a rubber composition comprising a modified rubber (A) which is obtained by mixing a modifying agent, a raw material rubber, a filler containing an inorganic filler (B), and a silane coupling agent (C). Further the temperature in the mixing is preferably in the range of 20 to 180°C, and more preferably in the range of 50 to 160°C. Further the amount of the modifying agent used in the mixing is, based on the total amount (100% by mass) of the raw material rubber, preferably 0.01 to 10% by mass, and more preferably 0.1 to 3.0% by mass.

The inorganic filler (B) in the present embodiment refers to an inorganic compound containing at least one selected from oxides or hydroxides of silicon, typical metals or transition metals, and hydrates thereof, and carbonate salts of these metals.

Specifically, the inorganic filler (B) is not especially limited as long as being an inorganic filler used in industries versed in the art. Here, carbon black to be described later is not included in the inorganic filler (B) mentioned herein, and does not fall under the inorganic filler (B). The inorganic fillers are roughly classified into reinforceable fillers such as surface-active silica and surface-treated clay, and non-reinforceable fillers such as calcium carbonate, clay and talc. Specific examples of the inorganic filler (B) include silica, calcium carbonate, magnesium carbonate, aluminum oxide, aluminum hydroxide, aluminum silicate (clay), magnesium silicate (talc), calcium silicate, and zinc white. The inorganic filler (B) is, in consideration of the interaction with the modified rubber, preferably a reinforceable filler, and more preferably silica. The silica is not especially limited, and there can be used wet silica (hydrous silicic acid), dry silica (anhydrous silicic acid), and the like.

In the case of using silica, the BET specific surface area is preferably 40 to 350 m²/g. When the BET specific surface area of silica is in this range, the particle diameter of silica becomes appropriate and it is likely that the tensile strength is improved and the hysteresis loss is decreased. The BET specific surface area can be measured according to JIS Z8830:2013.

As fillers to be used for the rubber composition according to the present embodiment, other than the above inorganic fillers, carbon black can also be added in order to enhance the reinforcing effect. Here, carbon black is a filler different from the above inorganic filler (B), and is distinctly distinguished from the inorganic filler (B). The carbon black is not especially limited, but includes various grades thereof such as GPF, FEF, SRF, HAF, ISAF and SAF.

The total content of the inorganic filler (B) and the carbon black in the rubber composition according to the present embodiment is not especially limited, but is, as a content of not worsening the processability and providing the sufficient low loss effect or the reinforcing effect, with respect to 100 parts by mass of a raw material rubber, preferably in the range of 5.0 to 100 parts by mass, and more preferably in the range of 20 to 80 parts by mass.

The silane coupling agent (C) in the present embodiment is not especially limited, but includes bis(3-triethoxysilylpropyl) tetrasulfide, bis(3-trimethoxysilylpropyl) tetrasulfide, bis(3-methyldimethoxysilylpropyl) tetrasulfide, bis(2-triethoxysilylethyl) tetrasulfide, bis(3-triethoxysilylpropyl) disulfide, bis(3-trimethoxysilylpropyl) disulfide, bis(3-triethoxysilylpropyl) trisulfide, 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, 2-lauroylthioethyltrimethoxysilane, 3-mercaptopropyltrimethoxysilane, 3-mercaptopropyltriethoxysilane, 3-mercaptopropylmethyldimethoxysilane, 3-aminopropyltrimethoxysilane, 3-aminopropyltriethoxysilane, γ-glycidoxypropyltrimethoxysilane, γ-glycidoxypropylmethyldiethoxysilane, 3-trimethoxysilylpropyl-N,N-dimethylthiocarbamoyl tetrasulfide, 3-trimethoxysilylpropylbenzothiazolyl tetrasulfide, and 3-trimethoxysilylpropylmethacryloyl monosulfide. The content thereof is preferably 1 to 20 parts by mass to 100 parts by mass of the above inorganic filler.

The rubber composition according to the present embodiment can be compounded with, in addition to the above modified rubber, the rubber, the inorganic filler and the silane coupling agent, appropriately selected compounding ingredients usually used in rubber industries such as, though not especially limited, an antioxidant, a softening agent, a vulcanization accelerator, a vulcanization accelerator aid and a vulcanizing agent, in the range not impairing the purpose of the present embodiment. As these compounding ingredients, commercially available products can suitably be used.

The kind of the antioxidant is not especially limited, but examples thereof include naphthylamine-based ones, p-phenylenediamine-based ones, hydroquinone derivatives, and bis-, tris- and poly-phenol-based, diphenylamine-based, quinolone-based, monophenol-based, thiobisphenol-based and hindered phenol-based ones; and in the point of the further antioxidation effect, preferable are amine-based antioxidants of p-phenylenediamine-based and diphenylamine-based ones. The diphenylamine-based antioxidant is not especially limited, but includes 4,4'-bis(α-methylbenzyl)diphenylamine, 4,4'-bis(α,α-dimethylbenzyl)diphenylamine, p-(p-toluenesulfonylamide)diphenylamine, and di(4-octylphenyl)amine; and among these, 4,4'-bis(α-methylbenzyl)diphenylamine is more preferable in the point of the further large antioxidation effect. Further the p-phenylenediamine-based antioxidant is not especially limited, but include N,N'-diphenyl-p-phenylenediamine, N-isopropyl-N'-phenyl-p-phenylenediamine, N,N'-di-2-naphthyl-p-phenylenediamine, N-cyclohexyl-N'-phenyl-p-phenylenediamine, N-phenyl-N'-(3-methacryloyloxy-2-hydroxypropyl)-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, and N-(1,3-dimethylbutyl)-N'-phenyl-p-phenylenediamine; and among these, from the further higher antioxidation effect and the cost side, N-(1,3-dimethylbutyl)-N'-phenyl-p-phenylenediamine is more preferable. The content of the antioxidant in the rubber composition is 0.1 to 5.0% by mass of the rubber component in the rubber composition.

The kind of the softening agent is not especially limited, but includes mineral oil-based softening agents derived from petroleum and coal tar, vegetable oil-based softening agents derived from fatty oils and pine resin oils, and synthetic resin-based softening agents.

The kind of the vulcanization accelerator is not especially limited, but includes thiazole-based ones such as mercaptobenzothiazole and 2,2'-dibenzothiazolyl disulfide, sulfenamide-based ones such as N-cyclohexyl-2-benzothiazolyl sulfenamide, N,N'-dicyclohexyl-2-benzothiazolyl sulfenamide and N'-tert-butyl-2-benzothiazolyl sulfenamide, and guanidine-based ones such as diphenylguanidine. These vulcanization accelerators may be used singly or in a combination of two or more thereof. The content thereof is preferably 0.1 to 5.0 parts by mass to 100 parts by mass of the rubber component. The vulcanization accelerator aid is not especially limited, but includes stearic acid and zinc white.

The kind of the vulcanizing agent is not especially limited, but vulcanizing agents used usually in industries versed in the art can suitably be used, and include sulfur and peroxides, preferably sulfur. The content of the vulcanizing agent is, with respect to 100 parts by mass of the rubber component, preferably 0.1 to 5.0 parts by mass, and more preferably 0.5 to 3.0 parts by mass. When the content of the vulcanizing agent is 0.1 part by mass or lower, sufficient vulcanization is likely to be obtained. When the content of the vulcanizing agent is 5.0 parts by mass or lower, it is likely that the so-called scorching time becomes short and the scorching of the rubber in kneading is likely to be able to be suppressed.

### <Tire>

A tire according to the present embodiment is characterized in using the above rubber composition, and the above rubber composition is preferably used for a tread of a tire member. The tire using the rubber composition as its tread is excellent in low fuel consumption. Here, the tire according to the present embodiment can be produced according to common methods without any limitation except for using the above-mentioned rubber composition for any of tire members. Further as a gas filled in the tire, there can be used ordinary air or air whose oxygen partial pressure is regulated, and besides, an inert gas such as nitrogen, argon and helium.

### Examples

Hereinafter, the present embodiment will be described in more detail by way of Examples and Comparative Examples, but the present embodiment is not any more limited to the following Examples.

### (Example 1)

41.4 g of a natural rubber coagulum (RSS#1, purchased from Kato Sansho Co., Ltd.) was charged in a Laboplastomill (manufactured by Toyo Seiki Seisaku-sho Ltd.) whose mixer interior was heated at 30°C, and kneaded at a rotation frequency of 60 rpm for 1 min in the state that the lid was closed and for 4 min in the state that the lid was opened. When the temperature of the rubber was raised up to 80°C by shearing heat build-up, 0.414 g (3.30 mmol) of a 1,3-diaminoguanidine hydrochloride salt (manufactured by Tokyo Chemical Industry Co., Ltd.) was charged, and further kneaded for 3 min to thereby obtain a modified rubber 1. At this time, the temperature of the rubber reached 85°C.

The modified rubber 1 (9.0 g) was refluxed under heating for 2 hours in 200 g of a mixed solvent of acetone and methanol in 2 : 1 to thereby extract the unreacted 1,3-diaminoguanidine hydrochloride salt. The solvent was distilled away under reduced pressure; and thereafter, the residue was quantitatively analyzed by liquid chromatography, and as a result, contained 0.044 g (0.21 mmol) of a bis(1-methylethylidene)diaminoguanidine hydrochloride salt being a condensate of the 1,3-diaminoguanidine hydrochloride salt with acetone. That is, the extracted unreacted 1,3-diaminoguanidine hydrochloride salt was 0.027 g (0.21 mmol); the 1,3-diaminoguanidine hydrochloride salt contained in the modified rubber 1 (9,0 g) before the elution was 0.089 g (0.71 mmol); thus, 70% by mol of the added 1,3-diaminoguanidine hydrochloride salt reacted with the natural rubber.

Therefore, it was confirmed that the addition amount of the 1,3-diaminoguanidine in the modified rubber 1 was 0.7% by mass to the solid rubber component in the natural rubber raw material.

### (Reference Example 1)

41.4 g of a natural rubber coagulum (RSS#1, purchased from Kato Sansho Co., Ltd.) was charged in a Laboplastomill (manufactured by Toyo Seiki Seisaku-sho Ltd.) whose mixer interior was heated at 30°C, and kneaded at a rotation frequency of 60 rpm for 1 min in the state that the lid was closed and for 4 min in the state that the lid was opened. When the temperature of the rubber was raised up to 80°C by shearing heat build-up, 0.414 g (3.75 mmol) of an aminoguanidine hydrochloride salt (manufactured by Tokyo Chemical Industry Co., Ltd.) was charged, and further kneaded for 3 min to thereby obtain a modified rubber 2. At this time, the temperature of the rubber reached 85°C.

### (Reference Example 2)

41.4 g of a natural rubber coagulum (RSS#1) was charged in a Laboplastomill whose reactor interior was heated at 30°C, and kneaded at a rotation frequency of 60 rpm for 1 min in the state that the lid was closed and for 4 min in the state that the lid was opened. After the temperature of the rubber reached 80°C by shearing heat build-up, the rubber was further kneaded for 3 min to thereby obtain an unmodified rubber 1. At this time, the temperature of the rubber reached 85°C.

### (Example 2, and Comparative Examples 1 and 2)

In Example 2 and Comparative Examples 1 and 2, first, the modified rubber 1, the modified rubber 2 or the unmodified rubber 1 and silica, a silane coupling agent, a zinc white and a stearic acid according to compositions of Table 1 were kneaded at 140°C for 5 min by the above Laboplastomill, and thereafter once cooled to 55°C; sulfur and vulcanization accelerators were charged thereto, kneaded and after the temperature reached 90°C, further kneaded for 3 min to thereby prepare rubber compositions, respectively. Then, the rubber compositions were vulcanized at 145°C at 10 MPa for 38 to 40 min by using a press machine (manufactured by Kitagawa Seiki Co., Ltd.) to thereby obtain vulcanized rubber compositions. The following were components used. SL
Silica: trade name "Nipsil AQ"(BET specific surface area: 207 m²/g, manufactured by Tosoh Silica Corp.)
Silane coupling agent: bis(3-triethoxysilylpropyl) tetrasulfide (manufactured by Evonik Degussa Japan Co., Ltd.)
Zinc white (manufactured by Wako Pure Chemical Industries, Ltd.)
Stearic acid (manufactured by Wako Pure Chemical Industries, Ltd.)
Sulfur (manufactured by Hosoi Chemical Industry Co., Ltd., 250 µm)
Vulcanization accelerator (CBS): N-cyclohexyl-2-benzothiazolyl sulfenamide (manufactured by Wako Pure Chemical Industries, Ltd.)
Vulcanization accelerator (DPG): diphenylguanidine (manufactured by Wako Pure Chemical Industries, Ltd.)

### (Example 3, and Comparative Examples 3 and 4)

In Example 3 and Comparative Examples 3 and 4, first, the natural rubber coagulum (RSS#1), silica, a silane coupling agent, a zinc white and a stearic acid, and a modifying agent 1 or 2 according to compositions of Table 2 were kneaded at 140°C for 5 min by the above Laboplastomill, and thereafter once cooled to 55°C; sulfur and vulcanization accelerators were charged thereto, and kneaded at 90°C for 3 min to thereby prepare rubber compositions, respectively. Then, the rubber compositions were vulcanized at 145°C at 10 MPa for 37 to 39 min by using a press machine (manufactured by Kitagawa Seiki Co., Ltd.) to thereby obtain vulcanized rubber compositions. The following were components used (components used in Table 1 were the same).
Modifying agent 1: 1,3-diaminoguanidine hydrochloride salt (manufactured by Tokyo Chemical Industry Co., Ltd.)
Modifying agent 2: aminoguanidine hydrochloride salt (manufactured by Tokyo Chemical Industry Co., Ltd.)

For the vulcanized rubber compositions, the heat build-up and the tensile breaking strength were measured and evaluated by the following methods. The results are shown in Tables 1 and 2.

### (1) Heat build-up

For the above vulcanized rubber compositions, there was measured the loss tangent (tanδ) at a temperature of 50°C, at a strain of 0.5% and at a frequency of 10 Hz by using a dynamic viscoelasticity analyzer (DMS6100, manufactured by Seiko Instruments Inc.); and with measurement values of Comparative Example 2 in Table 1 and Comparative Example 4 in Table 2 being taken to be 100, respective measurement values were expressed as index numbers. These index numbers indicate that the lower the index number, the lower the tanδ and the lower the heat build-up of a rubber composition.

### (2) Tensile breaking strength

For the above vulcanized rubber compositions, the tensile test was carried out according to JIS K6251:2010 to measure the tensile breaking strength; and with measurement values of Comparative Example 2 in Table 1 and Comparative Example 4 in Table 2 being taken to be 100, respective measurement values were expressed as index numbers. These index numbers indicate that the higher the index number, the higher the tensile breaking strength.

**[Table 1]**

| | Example 2 | Comparative Example 1 | Comparative Example 2 |
|---|---|---|---|
| Modified Rubber 1 | 100 | - | - |
| Modified Rubber 2 | - | 100 | - |
| Unmodified Rubber 1 | - | - | 100 |
| Silica | 50 | 50 | 50 |
| Silane Coupling Agent | 5 | 5 | 5 |
| Zinc White | 3 | 3 | 3 |
| Stearic Acid | 1 | 1 | 1 |
| Sulfur | 1.75 | 1.75 | 1.75 |
| Vulcanization Accelerator (CBS) | 1 | 1 | 1 |
| Vulcanization Accelerator (DPG) | 0.5 | 0.5 | 0.5 |
| Heat Build-Up | 68 | 85 | 100 |
| Tensile Breaking Strength | 108 | 104 | 100 |

In Table 1, each component in compounding prescription is indicated in parts by mass.

From Table 1, it was at least confirmed that the rubber composition of Example was better in the low heat build-up and higher in the tensile breaking strength as compared with the rubber compositions mixed by using a dienic rubber which had not been modified with the 1,3-diaminoguanidine salt.

**[Table 2]**

| | Example 3 | Comparative Example 3 | Comparative Example 4 |
|---|---|---|---|
| Natural Rubber | 100 | 100 | 100 |
| Silica | 50 | 50 | 50 |
| Silane Coupling Agent | 5 | 5 | 5 |
| Zinc White | 3 | 3 | 3 |
| Stearic Acid | 1 | 1 | 1 |
| Sulfur | 1.75 | 1.75 | 1.75 |
| Vulcanization Accelerator (CBS) | 1 | 1 | 1 |
| Vulcanization Accelerator (DPG) | 0.5 | 0.5 | 0.5 |
| Modifying Agent 1 | 1 | - | - |
| Modifying Agent 2 | - | 1 | - |
| Heat Build-Up | 64 | 80 | 100 |
| Tensile Breaking Strength | 105 | 102 | 100 |

In Table 2, each component in compounding prescription is indicated in parts by mass.

From Table 2, it was at least confirmed that the rubber composition of Example was better in the low heat build-up and higher in the tensile breaking strength as compared with the rubber compositions mixed by not adding the 1,3-diaminoguanidine salt.

The present application is based on Japanese Patent Application (Japanese Patent Application No. 2014-186074), filed with the Japan Patent Office on September 12, 2014, and the content are incorporated herein by reference.

### Industrial Applicability

The modified rubber and the rubber composition according to the present invention can be utilized as materials of various types of tire members including tires, and the like.

## Claims

1. A modified rubber (A), obtained by modifying at least one rubber selected from the group consisting of natural rubbers and synthetic rubbers with a compound represented by formula (1): 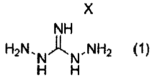 wherein X is an acid forming a salt with a guanidine moiety.

2. The modified rubber (A) according to claim 1, obtained by mixing the at least one rubber selected from the group consisting of natural rubbers and synthetic rubbers with the compound represented by formula (1), at a temperature of 20 to 180°C.

3. The modified rubber (A) according to claim 1 or 2, wherein an amount of the compound represented by formula (1) used is 0.01 to 10% by mass based on a total amount of the rubber.

4. A rubber composition, comprising: a modified rubber (A) according to any one of claims 1 to 3; a filler comprising an inorganic filler (B), and a silane coupling agent (C).

5. The rubber composition according to claim 4, wherein the inorganic filler (B) is silica.

6. The rubber composition according to claim 4 or 5, wherein the filler comprises carbon black.

7. The rubber composition according to any one of claims 4 to 6, at least partially comprising the modified rubber (A), wherein the rubber composition is obtained by mixing the compound represented by formula (1), the at least one rubber selected from the group consisting of natural rubbers and synthetic rubbers, the filler comprising the inorganic filler (B), and the silane coupling agent (C).

8. The rubber composition according to claim 7, wherein a temperature in the mixing is in the range of 20 to 180°C.

9. The rubber composition according to claim 7 or 8, wherein an amount of the compound represented by formula (1) used is 0.01 to 10% by mass based on a total amount of the rubber.

10. A tire, for use in a tread of a tire member, comprising the rubber composition according to any one of claims 4 to 9.
